(19) Europäisches Patentamt
European Patent Office
Office européen des brevets

(11) **EP 1 942 653 A1**

(12) **EUROPEAN PATENT APPLICATION**

(43) Date of publication:
**09.07.2008 Bulletin 2008/28**

(51) Int Cl.:
***H04N 1/387*** *(2006.01)*

(21) Application number: **07118676.1**

(22) Date of filing: **17.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **08.01.2007 KR 20070002183**

(71) Applicant: **Samsung Electronics Co., Ltd.**
**Suwon-si, Gyeonggi-Do (KR)**

(72) Inventor: **KIM, Kyeong-man,**
**4309-1701, Eoeunmok-maeul Koaroo Ap.**
**Giheung-gu, Yongin-si, Gyeonggi-do (KR)**

(74) Representative: **Clark, Charles Robert et al**
**Venner Shipley LLP**
**20 Little Britain**
**London EC1A 7DH (GB)**

(54) **Image forming device and method**

(57)    An image forming device includes a scanning unit to scan a document, a user interface unit to set a region to be enlarged among a whole region of the document and a size of an enlarged region, and a scanning processing unit to enlarge a first image that belongs to the region to be enlarged in accordance with the size of the enlarged region, to reduce a second image that belongs to the remaining region of the document, and to generate scanning data that includes the enlarged first image and the reduced second image.

## FIG. 5A

# FIG. 5B

DRAMA "MERMAID"... HER FATHER
HAS DITCHED HIS FAMILY AND
RUN OFF WITH AN ACTRESS...
HER FATHER HAS DITCHED HIS
FAMILY AND RUN OFF WITH AN
ARIYOUNG IS HAVING A DIFFICULT TIME.
SHE HAS DECIDED TO HER REVENGE ON HER FATHER.
ARIYOUNG IS HAVING A DIFFICULT TIME. HER FATHER
HAS DITCHED HIS FAMILY AND RUN OFF WITH AN
ACTRESS... SHE HAS DECIDED TO HER REVENGE ON HER
FATHER. ARIYOUNG IS HAVING A DIFFICULT TIME.
HER FATHER HAS DITCHED HIS FAMILY AND RUN OFF WITH

**Description**

The present general inventive concept relates to an image forming device and a method thereof. More particularly, but not exclusively, the present general inventive concept relates to an image forming device and a method thereof, which can enlarge a part of a document to be printed and simultaneously reduce the remaining part of the document when it is intended to print the document with the part thereof enlarged.

Generally, image forming devices are devices that print a document or data onto a printing sheet or paper. Among them, image forming devices which print the document on the printing paper or output the document on a display screen through a scanning process may be a scanner, a copy machine, a multifunction device, and so forth. In the case of scanning the document, the image forming devices have a function of printing the document with a part thereof enlarged.

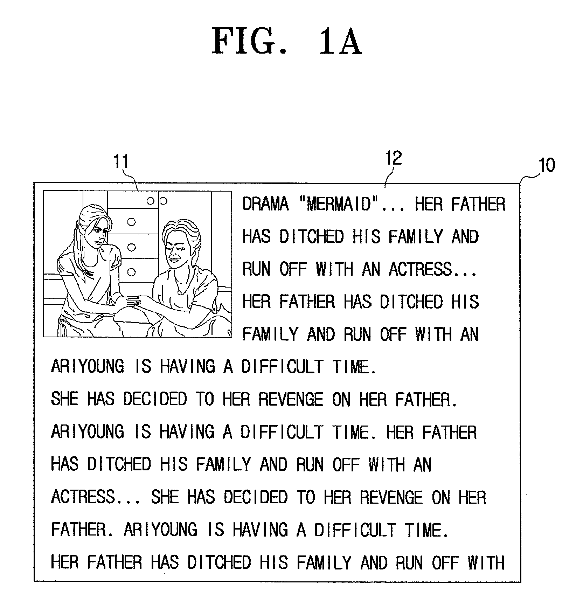

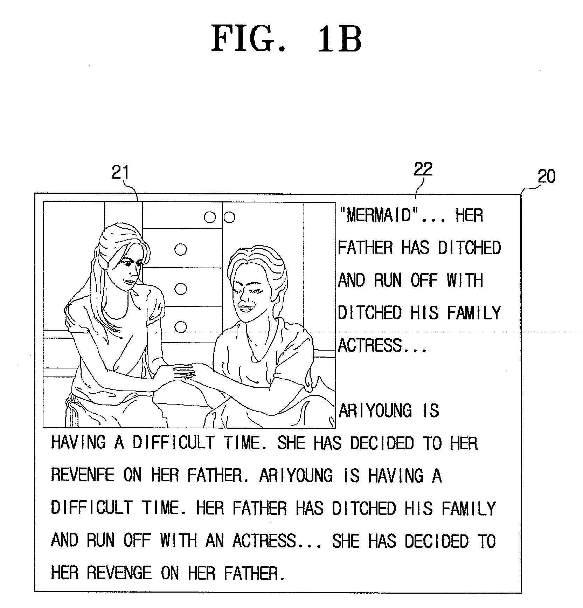

Figures 1A and 1B are schematic views illustrating a conventional document image having a part of which is enlarged. Figure 1A shows the conventional document before the part thereof is enlarged, and Figure 1B show the document after the part thereof is enlarged.

Referring to Figure 1A, a document 10 includes a picture region 11 and a text region 12. If a user intends to print the scanned document with the picture region 11 enlarged, he/she sets the picture region 11 as a region to be enlarged.

Accordingly, the document 20 is printed with the picture region 21 enlarged, as shown in Figure 1B. In this case, although the picture region 21 is enlarged, a data loss occurs in the text region 22 due to the enlarged picture region 21. This problem becomes more sever as the size of the picture region 21 becomes larger. In the worst case, all data of the text region 22 may be lost. In this case, a user is unable to recognize the data of the text region 22 included in the document.

The present general inventive concept aims to provide an image forming device and a method thereof, which can enlarge a part of a document to be printed and simultaneously reduce the remaining part of the document, so that a loss of data included in the document can be prevented, when it is intended to print the document with the part thereof enlarged.

The foregoing and other objects and advantages of the present general inventive concept may be achieved by providing an image forming device which includes a scanning unit to scan a document, a user interface unit to set a region to be enlarged among a whole region of the document and a size of an enlarged region, and a scanning processing unit to enlarge a first image that belongs to the region to be enlarged in accordance with the size of the enlarged region, reduce a second image that belongs to the remaining region of the document, and generate scanning data that includes the enlarged first image and the reduced second image.

The image forming device may further include a print unit to print the generated scanning data on a printing paper.

The image forming device may further include an interface unit to transmit the generated scanning data to an external device.

The scanning processing unit may adjust a size of the second image to a size obtained by excluding the region occupied by the enlarged first image from the whole region of the document.

The user interface unit may include an output unit to output an image of the document scanned by the scanning unit, and an input unit to input a signal to set the region to be enlarged and the size of the enlarged region with respect to the outputted image.

The user interface unit may include an output unit to output an image in the form of a document and a window to determine the region to be enlarged on the image, and an input unit to receive an input of a signal to adjust a position and a size of the window. The scanning processing unit may recognize the region that belongs to the window having the position and the size adjusted by the input signal, as the region to be enlarged.

The scanning processing unit may reduce the size of the second image using Equations (1) and (2) below,

$$D_L = A_L - C_L, \quad D_W = A_W - C_W \qquad \qquad ......(1)$$

$$E_L = (A_L - B_L)/D_L, \quad E_W = (A_W - B_W)/D_W \quad ......(2)$$

where $A_W$ denotes a horizontal length of the whole document, $B_W$ a horizontal size of the enlarged region, $C_W$ a horizontal size of the region to be enlarged, $D_W$ a length obtained by subtracting $C_W$ from $A_W$, $E_W$ a reduction ratio corresponding to a horizontal length of the second image, $A_L$ a vertical length of the whole document, $B_L$ a vertical length of the enlarged region, $C_L$ a vertical length of the region to be enlarged, $D_L$ a length obtained by subtracting $C_L$ from $A_L$, and $E_L$ a reduction ratio corresponding to a vertical length of the second image, respectively.

The scanning processing unit may separately set a horizontal reduction ratio and a vertical reduction ratio of the image positioned in a horizontal direction of the first image, and a horizontal reduction ratio and a vertical reduction ratio of the image positioned in a vertical direction of the first mage, among the second image that belongs to the remaining region.

The image forming device may further include a storage unit to store the generated scanning data.

The foregoing and other aspects and utilities of the present general inventive concept may also be achieved by providing an image forming method of an image forming device, which includes scanning a document, and enlarging a first image that belongs to a region to be enlarged among a whole region of the document in accordance with a size of an enlarged region, reducing a second image that belongs to the remaining region of the document, and generating scanning data that includes the enlarged first image and the reduced second image.

The image forming method may further include printing the generated scanning data on a printing paper.

The image forming method may further include transmitting the generated scanning data to an external device.

The reducing of the second image may include adjusting a size of the second image to a size obtained by excluding the region occupied by the enlarged first image from the whole region of the document.

The scanning of the document may include outputting an image of the scanned document; and setting the region to be enlarged and the size of the enlarged region with respect to the outputted image.

The scanning of the document may include outputting an image in the form of a document and a window for determining the region to be enlarged on the image; receiving an input of a signal for adjusting a position and a size of the window; and recognizing the region that belongs to the window having the position and the size adjusted by the input signal, as the region to be enlarged.

The reducing of the second image may include reducing the size of the second image using Equations (1) and (2) below,

$$D_L = A_L - C_L, \quad D_W = A_W - C_W \qquad \dots\dots(1)$$

$$E_L = (A_L - B_L)/D_L, \quad E_W = (A_W - B_W)/D_W \quad \dots\dots(2)$$

wherein $A_W$ denotes a horizontal length of the whole document, $B_W$ a horizontal size of the enlarged region, $C_W$ a horizontal size of the region to be enlarged, $D_W$ a length obtained by subtracting $C_W$ from $A_W$, $E_W$ a reduction ratio corresponding to a horizontal length of the second image, $A_L$ a vertical length of the whole document, $B_L$ a vertical length of the enlarged region, $C_L$ a vertical length of the region to be enlarged, $D_L$ a length obtained by subtracting $C_L$ from $A_L$, and $E_L$ a reduction ratio corresponding to a vertical length of the second image, respectively.

The reducing of the second image may include separately setting a horizontal reduction ratio and a vertical reduction ratio of the image positioned in a horizontal direction of the first image, and a horizontal reduction ratio and a vertical reduction ratio of the image positioned in a vertical direction of the first mage, among the second image that belongs to the remaining region.

The foregoing and other aspects and utilities of the present general inventive concept may also be achieved by providing a computer-readable medium to contain computer-readable codes as a program to executed a method of an image forming device, the method including scanning a document, and enlarging a first image that belongs to a region to be enlarged among a whole region of the document in accordance with a size of an enlarged region, reducing a second image that belongs to a remaining region of the document, and generating scanning data that includes the enlarged first image and the reduced second image.

The foregoing and other aspects and utilities of the present general inventive concept may also be achieved by providing an image forming apparatus including a scanning processing unit to receive a document image having a first image and a second image, and to enlarge a size of the first image and to reduce a size of the second image according to enlargement of the first image.

The enlarged first image and the second image may overlap within the document image, and the enlarged first image and the reduced second image do not overlap within the document image.

The enlarge first image may include an overlap area with the second image, and the scanning processing unit may reduce the second image to the reduced second image to remove the overlap area.

The second image may include a region disposed on a side of the first image and another region disposed another side of the first image, and the region of the second image, and the scanning processing unit may apply a first reduction ratio to the first region of the second image and a second reduction ratio to the another region of the second image.

The second image may include a region disposed on a side of the first image and another region disposed another side of the first image, and the region of the second image, and the scanning processing unit may reduce the region and the another region of the second image according to different dimensions.

The second image may include a region disposed on a side of the first image and another region disposed another side of the first image, and the region of the second image, and the scanning processing unit may reduce the region and the another region of the second image to a sub-region and a sub another region according to one of a location and a size.

The first image may include a picture image, and the second image may include a text image.

The first image may include a picture image, and the picture image may be changed from a first resolution to a first sub-resolution.

The second image may include a text image having one or more letters, and the one or more letters may be changed from a first characteristic to a second characteristic.

The first characteristic comprises a font.

The second image may be disposed in a remaining area of the document image excluding the first image, and the reduced image may be disposed in a second remaining area of the document excluding the enlarged first image.

The image forming apparatus may further include a scanning unit to scan a document to generate the document image.

The image forming apparatus may further include a printing unit to print the document image having the enlarged first image and the reduced second image.

The image forming apparatus may further include an interface unit to generate a signal representing a user interface to be displayed to set a region corresponding to the first image and another region corresponding to the enlarged first image.

The foregoing and other aspects and utilities of the present general inventive concept may also be achieved by providing an image forming apparatus including a scanning processing unit to generate an interface including a document image having a first image and a second image, and having a first key to enlarge a size of the first image and a second key to reduce a size of the second image.

The foregoing and other aspects and utilities of the present general inventive concept may also be achieved by providing an image forming apparatus including a scanning processing unit to convert a first document image having a first image and a second image into a second document image having a third image of an adjusted size of the first image and a fourth image of an adjusted size of the second image according to adjustment between the first image and the third image.

Embodiments of the present general inventive concept are now described by way of the example, and taken in conjunction with the accompanying drawings of which:

Figures 1A and 1B are schematic views illustrating a conventional document a part of which is enlarged;

Figure 2 is a block diagram illustrating an image forming device according to an exemplary embodiment of the present general inventive concept;

Figure 3 is a block diagram illustrating an image forming device according to another exemplary embodiment of the present general inventive concept;

Figures 4A and 4B are schematic views illustrating a user interface according to an exemplary embodiment of the present general inventive concept;

Figures 5A and 5B are schematic views illustrating a document to which an enlargement function has been applied according to an exemplary embodiment of the present general inventive concept;

Figures 6A and 6B are schematic views illustrating a document to which an enlargement function has been applied according to another exemplary embodiment of the present general inventive concept;

Figure 7 is a flowchart illustrating an image forming method of an image forming device according to an exemplary embodiment of the present general inventive concept; and

Figure 8 is a flowchart illustrating an image forming method of an image forming device according to another exemplary embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

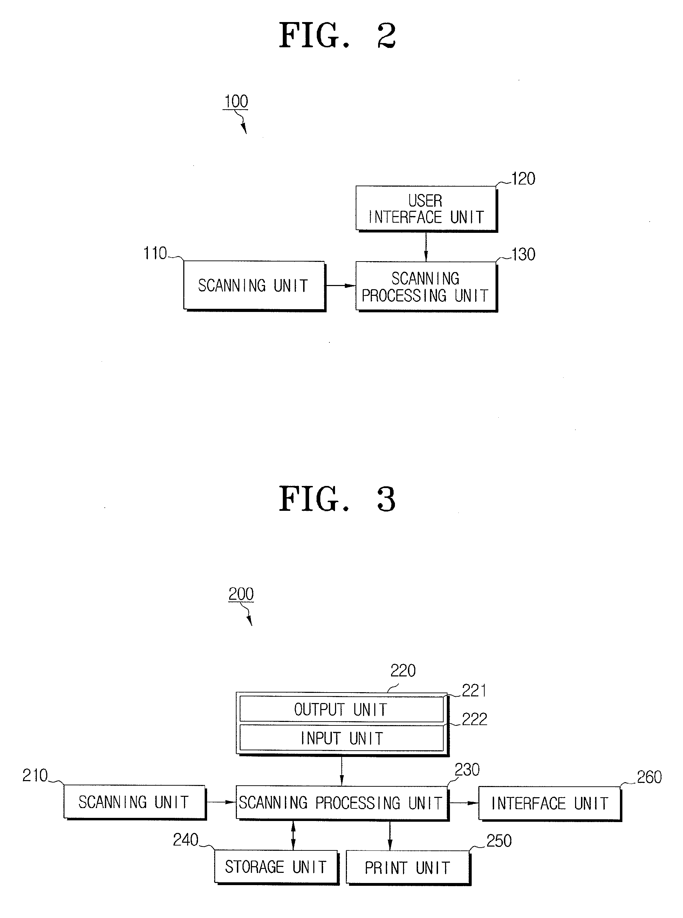

Figure 2 is a block diagram illustrating an image forming device 100 according to an exemplary embodiment of the present general inventive concept.

Referring to Figure 2, the image forming device 100 according to an exemplary embodiment of the present general inventive concept includes a scanning unit 110, a user interface unit 120, and a scanning processing unit 130.

The scanning unit 110 scans a document.

The user interface unit 120 receives setting of a region to be enlarged and a size of the enlarged region. Specifically, the user interface unit 120 provides a user interface to be displayed on a display unit, so that a user can set the region to be enlarged and the size of the enlarged region.

The scanning processing unit 130 enlarges a first image that belongs to the region to be enlarged among images included in the scanned document in accordance with the size of the enlarged region, reduces a second image that belongs to the remaining region of the document, and generates scanning data that includes the enlarged first image and the reduced second image. Accordingly, the first image is enlarged and simultaneously the second image is reduced, and thus a loss of data of the second image due to the enlargement of the first image can be prevented.

Figure 3 is a block diagram illustrating an image forming device 200 according to another exemplary embodiment of the present general inventive concept.

Referring to Figure 3, the image forming device 200 according to another exemplary embodiment of the present general inventive concept includes a scanning unit 210, a user interface unit 220, a scanning processing unit 230, a storage unit 240, a print unit 250, and an interface unit 260.

The scanning unit 210 scans a document.

The user interface unit 220 includes an output unit 221 and an input unit 220. If the image forming device 200 has a pre-scan function, the output unit 221 outputs an image of the document scanned by the scanning unit 210. In this case, the output unit 221 may be a display unit such as an LCD panel. Also, the input unit 222 receives setting of a region to be enlarged and a size of the enlarged region. Specifically, if a user sets the region to be enlarged and the size of the enlarged region through the user interface provide according to an enlargement function, the input unit 222 receives the corresponding setting signal.

If the image forming device 200 does not have a pre-scan function, the output unit 221 outputs an image in the form of a general image and a window to determine the region to be enlarged on the image. In addition, the input unit 222 receives an input signal to adjust the position and a size of the window that is outputted through the output unit 221. The input unit 222 receives a signal to set the region to be enlarged and the size of the enlarged region. In this case, the user can adjust the position and the size of the window using an adjustment button and so on provided on a main body of the image forming device 200.

The scanning processing unit 230 enlarges a first image that belongs to the region to be enlarged among images included in the document in accordance with the size of the enlarged region set through the input unit 222, reduces a second image that belongs to the remaining region of the document except for the region to be enlarged, and generates scanning data that includes the enlarged first image and the reduced second image. In this case, the scanning processing unit 230 reduces the size of the second image to a size of another region excluding the region occupied by the enlarged first image among the whole region of the document. Accordingly, a loss of data of the second image due to the enlargement of the first image can be prevented.

The scanning processing unit 230 generates the scanning data that includes the first image and the second image by reducing the size of the second image that belongs to the remaining region excluding the enlarged first image. In this case, the size of the second image to be reduced can be calculated using Equations (1) and (2).

$$D_L = A_L - C_L, \quad D_W = A_W - C_W \qquad ......(1)$$

$$E_L = (A_L - B_L)/D_L, \quad E_W = (A_W - B_W)/D_W \quad ......(2)$$

In Equations (1) and (2), $A_W$ denotes a horizontal length of the whole document, $B_W$ a horizontal size of the enlarged region, that is, the enlarged first image, $C_W$ a horizontal size of the region of the first image to be enlarged, $D_W$ a length obtained by subtracting $C_W$ from $A_W$, $E_W$ a reduction ratio corresponding to a horizontal length of the second image, $A_L$ a vertical length of the whole document, $B_L$ a vertical length of the enlarged region that is the enlarged first image, $C_L$ a vertical length of the region of the fist image to be enlarged, $D_L$ a length obtained by subtracting $C_L$ from $A_L$, and $E_L$ a reduction ratio corresponding to a vertical length of the second image, respectively. The horizontal length and the vertical length of the reduced second image can be calculated by Equations (1) and (2) according to the ratio (%)of an original image and an adjusted image. The reduction of the horizontal length and the vertical length of the second image calculated by Equation (2) will be described in more detail later.

In another exemplary embodiment of the present general inventive concept, the scanning processing unit 230 separately sets a horizontal reduction ratio and a vertical reduction ratio of one of the second image positioned in a horizontal direction of the first image, and a horizontal reduction ratio and a vertical reduction ratio of another one of the second image positioned in a vertical direction of the first mage, among the second image that belongs to the remaining region. That is, the scanning processing unit 230 divides the image positioned in the horizontal direction of the first image and the image positioned in the vertical direction of the first image, and separately reduces the divided images. Accordingly, the scanning processing unit 230 can generate the scanning data that includes the enlarged first image and the reduced second image.

An overlap region is formed between the enlarged first image and the second image. The overlap region may include a first overlap region disposed between vertical sides of the first and second images and a second overlap region disposed between the horizontal sides of the first and second images. The first overlap region is prevented by reducing the one of the second image and the another one of the second image according to one of a same reduction ratio or different reduction ratios.

The storage unit 240 stores the scanning data generated through the scanning processing unit 230.

The print unit 250 prints the scanning data that includes the first image and the second image on a printing paper.

The size of the scanned document including the first image and the second image may be the same as the printed document including the enlarge first image and the reduced second image. When the size of the scanned document is different from the printed document, the overlap region can be prevented by printing an image proportional to the document having the enlarged first image and the reduced second image.

The interface unit 260 transmits the generated scanning data to an external device. In this case, the external device may be a PC, and the scanning data is outputted on a monitor of the PC, so that a user can confirm the enlarged and reduced document.

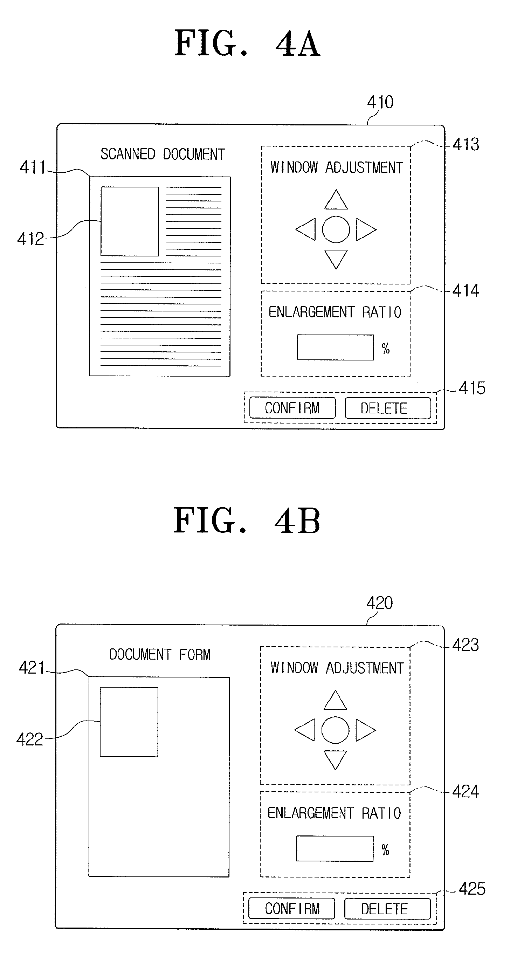

Figures 4A and 4B are schematic views illustrating a user interface according to an exemplary embodiment of the present general inventive concept. Figure 4A shows a first user interface 410 of the image forming device having a pre-scan function. Referring to Figure 4A, the first user interface 410 outputs a pre-scanned document image 411, and a window 412 to set a region to be enlarged on the document image 411. Accordingly, a user can set the region to be enlarged by confirming the output document image 411 and adjusting the position and the size of the window 412. In this case, the position and the size of the window 412 can be adjusted using keys provided in a window adjustment region 413. The keys of the window adjustment region 413 include a left key, a right key, a bottom key, and a top key to move or adjust left, right, bottom, and top sides of the window 412, respectively, and also include a center key to select the movement of the sides.

In addition, the first user interface 410 includes a region 414 for inputting the size of an enlarged image, and a user can input the enlargement ratio of the region to be enlarged through the region 414. In this case, the enlargement ratio (%) or actual values of the horizontal and vertical lengths may be inputted through the region 414 as the size of the enlarged image. If the user presses a "confirm" button of a selection key unit 415 in a state that the region to be enlarged and the size of the enlarged region have been inputted through the respective regions of the first user interface 410, the inputted values of the region to be enlarged and the size of the enlarged region are set. When a delete key is selected, the input values are deleted. Accordingly, the image forming device 200 adjusts the size of the image in accordance with the region to be enlarged and the size of the enlarged region set through the first user interface 410, and generates the corresponding scanning data.

Figure 4B shows a second user interface unit 420 of the image forming device having no pre-scan function. Referring to Figure 4B, the second user interface 420 outputs an image 421 in the form of a general document before being scanned, and a window 422 to set or adjust a region to be enlarged on the image 421 in the form of a document. Accordingly, a user can set the region to be enlarged by estimating the position and the size of the region to be enlarged among the document to be scanned and adjusting the position and the size of the window 422 accordingly. In this case, the position and the size of the window 422 can be adjusted using buttons provided in a window adjustment region 423.

In addition, the second user interface 420 includes a region 424 to input the size of an image to be enlarged, and a user can input the enlargement ratio of the region to be enlarged through the region 424. If the user presses a "confirm" button in a selection region 425 in a state that the region to be enlarged and the size of the enlarged region have been inputted through the respective regions of the second user interface 420, the inputted values of the region to be enlarged and the size of the enlarged region are set.

Accordingly, the image forming device 200 scans the document in accordance with the region to be enlarged and the size of the enlarged region set through the second user interface 420, and adjusts the size of the image.

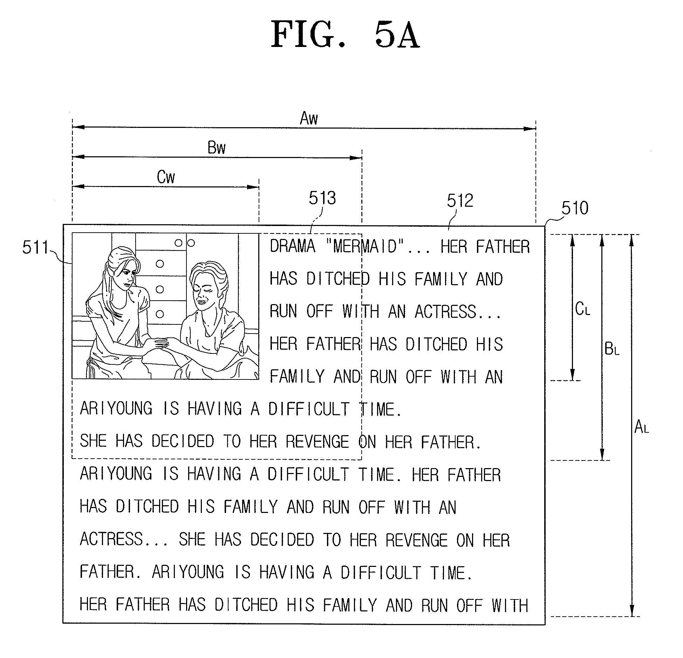

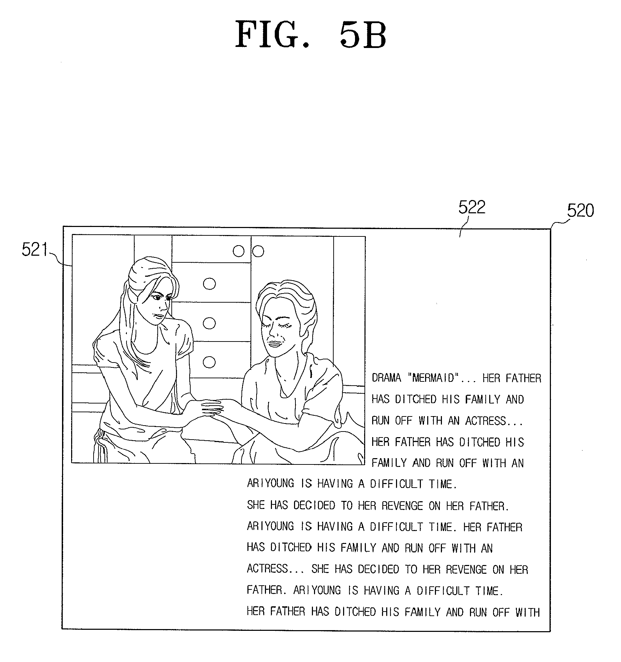

Figures 5A and 5B are schematic views illustrating a document to which an enlargement function has been applied according to an exemplary embodiment of the present general inventive concept. Figure 5A shows a scanned first document 510, which includes text and picture data.

If a first image region 511 having a first image is set as the region to be enlarged on the first document 510, and the enlarged size of the first image region 511 is set as a region 513 indicated in dotted line, the reduced size of a second image region 512 having a second image that belongs to the remaining region excluding the first image region 511 is calculated. In this case, the reduced size of the second image region 512 can be calculated using Equations (1) and (2) as described above.

For example, if a horizontal length $A_W$ of the whole document is set to 21cm, a vertical length $A_L$ of the whole document 29cm, a horizontal size $C_W$ of the region to be enlarged 6cm, a vertical length $C_L$ of the region to be enlarged 8cm, a horizontal size $B_W$ of the enlarged region 10cm, and a vertical length $B_L$ of the enlarged region 13cm, respectively, respective values are substituted in Equation (1), so that the horizontal length of the reduced second image region 512 is calculated to have the reduction rate of about 73% with respect to the second image to prevent an overlap region with a portion of the enlarged first image, and the vertical length $E_L$ of the second image region is calculated to have the reduction rate of about 76%. In this case, as the horizontal length and the vertical length of the second image region 521 are reduced to the calculated sizes, respectively, the size of the character included in the second image region 512, the character spacing, the line spacing, and so forth, can be uniformly adjusted. Accordingly, as illustrated in FIGURE 5B, the second document 520 to which the enlargement function has been applied can be produced. That is, the first image region 512 is enlarged and the second image region 522 is reduced, so that the scanning data can be generated without data loss.

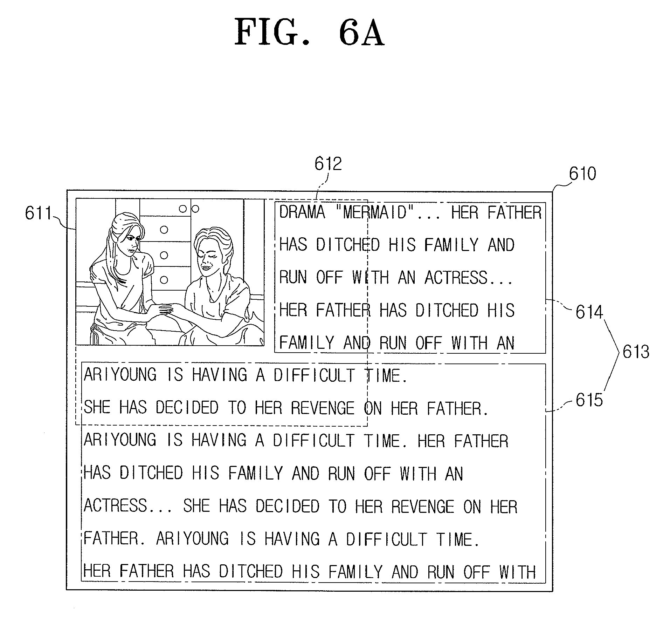

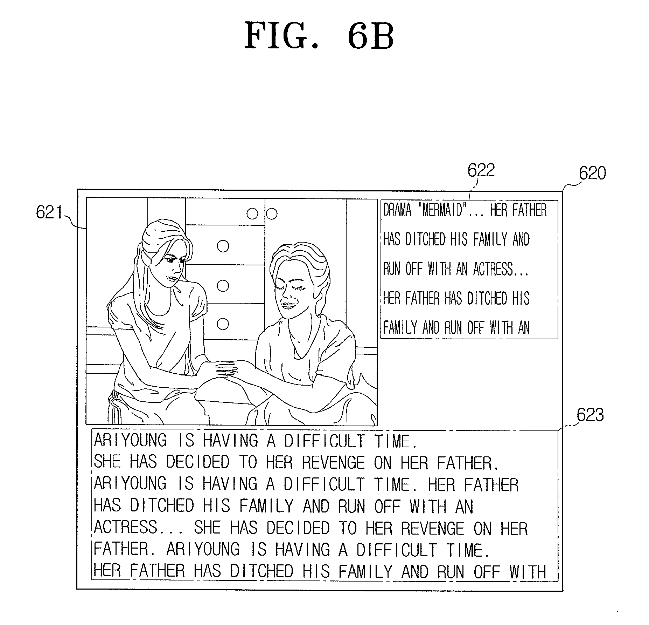

Figures 6A and 6B are schematic views illustrating a document to which an enlargement function has been applied according to another exemplary embodiment of the present general inventive concept. Figure 6A shows a scanned document 610.

A first image region 611 is set as the region to be enlarged on the document 610, and the enlarged size of the first image region 611 is set as a region 612 indicated in dotted line. In this case, a second image region 613 that belongs to the remaining region excluding the first image region 611 is divided in vertical and horizontal directions. Accordingly, the second image region 613 is divided into a region 614 disposed next to a vertical side of the first image 611, that is, adjacent to a vertical region of the first image region 611 and a region 615 disposed next to a horizontal side of the first image 611, that is, adjacent to a horizontal region of the first image region 611.

The image forming device 200 reduces the region 614 of the second image region 613 and reduces the region 615 of the second image region 613. That is, the size of the second image region 613 can be reduced in a manner that the region 614 in the vertical and/or horizontal direction and the region 615 in the horizontal and/or vertical direction are reduced by the horizontal reduction ratio and the vertical reduction ratio, respectively. Accordingly, as illustrated in Figure 6B, the document to which the enlargement function has been applied can be produced. In other words, the first image region 621 is enlarged, while the second image region is divided into two regions and the divided regions are reduced separately according to a same ration or different ratios.

In Figure 6A, when the region 614 of the second image region 613 is horizontally reduced, the size of the character and the line spacing are maintained and only the character spacing is reduced. Meanwhile, since the region 615 of the second image region 613 is vertically reduced, the size of the character and the character spacing are maintained and only the line spacing is reduced, to produce the document as shown in Figure 6B.

In Figures 5A, 5B, 6A, and 6B, it is exemplified that the scanned document and the printing paper have the same size. However, it is apparent that the present general inventive concept can be applied to a case that the scanning document and the printing paper have different sizes.

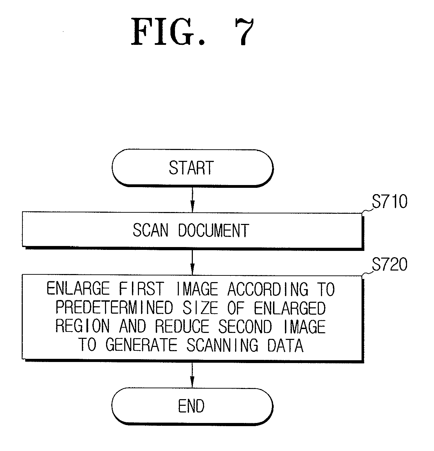

Figure 7 is a flowchart illustrating an image forming method of an image forming device according to an exemplary embodiment of the present general inventive concept.

Referring to Figures 2 and 7, the image forming device 100 scans a document in operation S710.

Then, the image forming device 100 enlarges the first image that belongs to the region to be enlarged among the whole region of the scanned document in accordance with the predetermined size of the enlarged region, reduces the second image that belongs to the remaining region of the document excluding the first image, and generates the scanning data in operation S720. Specifically, the image forming device 100 adjusts the size of the second image to the size of the region excluding the region occupied by the enlarged first image among the whole region of the document. Accordingly, the scanning data that includes the first image and the second image can be generated.

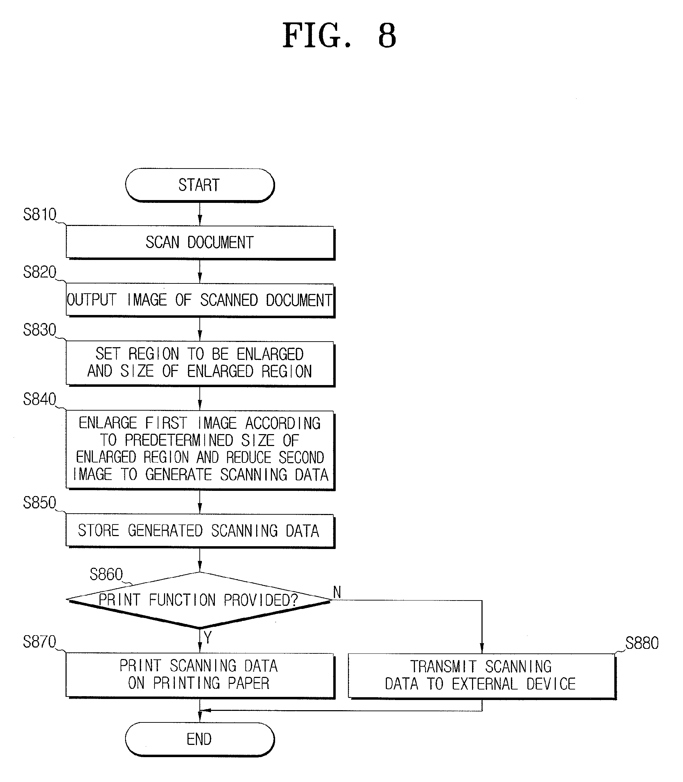

Figure 8 is a flowchart illustrating an image forming method of an image forming device according to another exemplary embodiment of the present general inventive concept.

Referring to Figures 3 and 8, the image forming device 200 scans the document in operation S810. In this case, the document may include text and picture data.

The image forming device 200 then outputs an image of the scanned document in operation S820. Specifically, the image of the scanned document can be outputted through a display panel (e.g., LCD panel) provided in the image forming device 200.

Then, the image forming device 200 receives the setting of the region to be enlarged and the size of the enlarged region among the scanned document in operation S830. In this case, the region to be enlarged and the size of the enlarged region can be set through a user's confirming and adjusting of the image of the document outputted in operation S820.

The image forming device 200 enlarges the first image that belongs to the region to be enlarged among images included in the scanned, reduces the second image that belongs to the remaining region of the document except for the region to be enlarged, and generates the scanning data in operation S840. Specifically, the image forming device 200 enlarges the first image that belongs to the region to be enlarged according to the set size of the enlarged region and reduces the horizontal and vertical lengths of the second image according to the size of the second image calculated using Equations (1) and (2).

In another exemplary embodiment of the present general inventive concept, the image forming device 200 divides the second image into a region in the vertical direction of the first image and a region in the horizontal direction of the first image, and reduces the divided regions with the separately set reduction rates, respectively

Consequently, the first image is enlarged and the second image is reduced, so that the scanning data including the enlarged first image and the reduced second image is generated.

Thereafter, the image forming device 200 stores the generated scanning data in operation S850.

If the image forming device 200 has a printing function in operation S860, it prints the generated scanning data on the printing paper in operation S870. By contrast, if the image forming device 200 does not have the printing function in operation S860, it transmits the scanning data to an external device connected through an interface in operation S880. Specifically, in the case of a scanner having a scan function but having no print function, the image forming device transmits the scanning data to a PC connected to the scanner so as to output the scanning data through the PC monitor.

The present general inventive concept can also be embodied as computer-readable codes on a computer-readable medium. The computer-readable medium can include a computer-readable recording medium and a computer-readable transmission medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

As described above, according to the present general inventive concept, in the case of enlarging a part of a document, a first image region that belongs to the region to be enlarged is enlarged and simultaneously a second image region that belong to the remaining region except for the first image region is reduced, so that a loss of data of the second image region due to the enlarged first image region can be prevented.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

**Claims**

1. An image forming apparatus comprising:

   a processing unit arranged to receive a document image comprising a first image portion and a second image portion, and to enlarge a size of the first image portion and to reduce a size of the second image portion according to enlargement of the first image portion.

2. The device according to claim 1, further comprising:

   a scanning unit arranged to scan the document; and
   a user interface unit arranged to set the first image portion or region to be enlarged among a whole region of the document and a size by which the first image portion is to be enlarged region;
   wherein the processing unit is arranged to generate scanning data that includes the first and second image portions.

3. The image forming device of claim 1 or 2, further comprising a print unit arranged to print generated scanning data.

4. The image forming device of claim 1, 2 or 3, further comprising means to transmit the generated scanning data to an external device.

5. The image forming device of any preceding claim, wherein the processing unit is arranged to adjust a size of the second image portion to a size obtained by excluding a region occupied by the enlarged first image from the whole region of the document.

6. The image forming device of claim 2, wherein the user interface unit comprises:

an output unit arranged to output an image of the document scanned by the scanning unit; and
an input unit arranged to input a signal to set the region to be enlarged and the size of the enlarged region with respect to the outputted image.

7. The image forming device of claim 2, wherein:

the user interface unit comprises:

an output unit arranged to output an image in the form of a document and a window for determining the region to be enlarged on the image, and
an input unit arranged to receive an input of a signal for adjusting a position and a size of the window; and

the processing unit is arranged to recognize the region that belongs to the window having the position and the size adjusted by the input signal, as the region to be enlarged.

8. The image forming device of claim 1 or 2, wherein the processing unit is arranged to reduce a size of the second image using Equations (1) and (2) below,

$$D_L = A_L - C_L, \quad D_W = A_W - C_W \qquad \qquad ......(1)$$

$$E_L = (A_L - B_L)/D_L, \quad E_W = (A_W - B_W)/D_W \quad ......(2)$$

where $A_W$ denotes a horizontal length of the whole document, $B_W$ a horizontal size of the enlarged region, $C_W$ a horizontal size of the region to be enlarged, $D_W$ a length obtained by subtracting $C_W$ from $A_W$, $E_W$ a ratio corresponding to a horizontal length of the second image, $A_L$ a vertical length of the whole document, $B_L$ a vertical length of the enlarged region, $C_L$ a vertical length of the region to be enlarged, $D_L$ a length obtained by subtracting $C_L$ from $A_L$, and $E_L$ a ratio corresponding to a vertical length of the second image, respectively.

9. The image forming device of claim 1 or 2, wherein the processing unit is arranged to separately set a horizontal reduction ratio and a vertical reduction ratio of the image positioned in a horizontal direction of the first image, and a horizontal reduction ratio and a vertical reduction ratio of the image positioned in a vertical direction of the first image portion, among the second image portion that belongs to the remaining region.

10. The image forming device of claim 1, further comprising:

a storage unit arranged to store generated scanning data.

11. An image forming method for an image forming device, comprising:

enlarging a first image portion that belongs to a region to be enlarged among a whole region of a document in accordance with a size of an enlarged region, reducing a second image portion that belongs to the remaining region of the document, and generating data that includes the enlarged first image and the reduced second image.

**12.** The image forming method of claim 11, further comprising printing the generated data.

**13.** The image forming method of claim 11, further comprising transmitting the generated scanning data to an external device.

**14.** The image forming method of claim 11, further comprising scanning the document prior to the enlarging, wherein the scanning of the document comprises adjusting a size of the second image to a size obtained by excluding the region occupied by the enlarged first image from the whole region of the document.

**15.** The image forming method of claim 11, further comprising scanning the document prior to the enlarging, wherein the scanning of the document comprises:

outputting an image of the scanned document; and
setting the region to be enlarged and the size of the enlarged region with respect to the outputted image.

**16.** The image forming method of claim 11, wherein the reducing of the second image portion comprises:

outputting an image in the form of a document and a window for determining the region to be enlarged on the image;
receiving an input of a signal for adjusting a position and size of the window; and
recognizing the region that belongs to the window having the position and the size adjusted by the input signal, as the region to be enlarged.

**17.** The image forming method of claim 11, wherein the reducing of the second image portion comprises reducing the size of the second image using Equations (1) and (2) below,

$$D_L = A_L - C_L, \quad D_W = A_W - C_W \qquad ......(1)$$

$$E_L = (A_L - B_L)/D_L, \quad E_W = (A_W - B_W)/D_W \quad ......(2)$$

wherein $A_W$ denotes a horizontal length of the whole document, $B_W$ a horizontal size of the enlarged region, $C_W$ a horizontal size of the region to be enlarged, $D_W$ a length obtained by subtracting $C_W$ from $A_W$, $E_W$ a ratio corresponding to a horizontal length of the second image, $A_L$ a vertical length of the whole document, $B_L$ a vertical length of the enlarged region, $C_L$ a vertical length of the region to be enlarged, $D_L$ a length obtained by subtracting $C_L$ from $A_L$, and $E_L$ a ratio corresponding to a vertical length of the second image, respectively.

**18.** The image forming method of claim 11, wherein the reducing of the second image portion comprises separately setting a horizontal reduction ratio and a vertical reduction ratio of the image positioned in a horizontal direction of the first image, and a horizontal reduction ratio and a vertical reduction ratio of the image positioned in a vertical direction of the first mage, among the second image that belongs to the remaining region.

**19.** The image forming method of claim 11, further comprising:

storing the generated data in a storage medium.

**20.** A computer-readable medium to contain computer-readable codes as a program to executed a method of an image forming device according to any of claims 11 to 19.

# FIG. 1A

DRAMA "MERMAID"... HER FATHER
HAS DITCHED HIS FAMILY AND
RUN OFF WITH AN ACTRESS...
HER FATHER HAS DITCHED HIS
FAMILY AND RUN OFF WITH AN
ARIYOUNG IS HAVING A DIFFICULT TIME.
SHE HAS DECIDED TO HER REVENGE ON HER FATHER.
ARIYOUNG IS HAVING A DIFFICULT TIME. HER FATHER
HAS DITCHED HIS FAMILY AND RUN OFF WITH AN
ACTRESS... SHE HAS DECIDED TO HER REVENGE ON HER
FATHER. ARIYOUNG IS HAVING A DIFFICULT TIME.
HER FATHER HAS DITCHED HIS FAMILY AND RUN OFF WITH

# FIG. 1B

HAVING A DIFFICULT TIME. SHE HAS DECIDED TO HER
REVENFE ON HER FATHER. ARIYOUNG IS HAVING A
DIFFICULT TIME. HER FATHER HAS DITCHED HIS FAMILY
AND RUN OFF WITH AN ACTRESS... SHE HAS DECIDED TO
HER REVENGE ON HER FATHER.

# FIG. 2

100

120
USER INTERFACE UNIT

110
SCANNING UNIT

130
SCANNING PROCESSING UNIT

# FIG. 3

200

220
221
OUTPUT UNIT

222
INPUT UNIT

210
SCANNING UNIT

230
SCANNING PROCESSING UNIT

260
INTERFACE UNIT

240
STORAGE UNIT

250
PRINT UNIT

# FIG. 4A

410

SCANNED DOCUMENT

411

412

413
WINDOW ADJUSTMENT

414
ENLARGEMENT RATIO
%

415
CONFIRM    DELETE

# FIG. 4B

420

DOCUMENT FORM

421

422

423
WINDOW ADJUSTMENT

424
ENLARGEMENT RATIO
%

425
CONFIRM    DELETE

# FIG. 5A

DRAMA "MERMAID"... HER FATHER HAS DITCHED HIS FAMILY AND RUN OFF WITH AN ACTRESS... HER FATHER HAS DITCHED HIS FAMILY AND RUN OFF WITH AN ARIYOUNG IS HAVING A DIFFICULT TIME.
SHE HAS DECIDED TO HER REVENGE ON HER FATHER.
ARIYOUNG IS HAVING A DIFFICULT TIME. HER FATHER HAS DITCHED HIS FAMILY AND RUN OFF WITH AN ACTRESS... SHE HAS DECIDED TO HER REVENGE ON HER FATHER. ARIYOUNG IS HAVING A DIFFICULT TIME.
HER FATHER HAS DITCHED HIS FAMILY AND RUN OFF WITH

# FIG. 5B

# FIG. 6A

# FIG. 6B

# FIG. 7

```
        ┌─────────────────────┐
        │        START        │
        └─────────────────────┘
                   │
                   ▼                      S710
  ┌──────────────────────────────────┐
  │          SCAN DOCUMENT           │
  └──────────────────────────────────┘
                   │
                   ▼                      S720
  ┌──────────────────────────────────┐
  │  ENLARGE FIRST IMAGE ACCORDING TO │
  │  PREDETERMINED SIZE OF ENLARGED   │
  │    REGION AND REDUCE SECOND IMAGE │
  │     TO GENERATE SCANNING DATA     │
  └──────────────────────────────────┘
                   │
                   ▼
        ┌─────────────────────┐
        │         END         │
        └─────────────────────┘
```

# FIG. 8

```
                    ┌──────────────────┐
                    │      START       │
                    └──────────────────┘
                             │
S810                         ▼
     ┌──────────────────────────────────────────┐
     │              SCAN DOCUMENT                │
     └──────────────────────────────────────────┘
                             │
S820                         ▼
     ┌──────────────────────────────────────────┐
     │    OUTPUT IMAGE OF SCANNED DOCUMENT       │
     └──────────────────────────────────────────┘
                             │
S830                         ▼
     ┌──────────────────────────────────────────┐
     │         SET REGION TO BE ENLARGED         │
     │       AND SIZE OF ENLARGED REGION         │
     └──────────────────────────────────────────┘
                             │
S840                         ▼
     ┌──────────────────────────────────────────┐
     │     ENLARGE FIRST IMAGE ACCORDING         │
     │       TO PREDETERMINED SIZE OF            │
     │   ENLARGED REGION AND REDUCE SECOND       │
     │   IMAGE TO GENERATE SCANNING DATA         │
     └──────────────────────────────────────────┘
                             │
S850                         ▼
     ┌──────────────────────────────────────────┐
     │       STORE GENERATED SCANNING DATA       │
     └──────────────────────────────────────────┘
                             │
        S860                 ▼
              ◇─────────────────────────────◇    N
               PRINT FUNCTION PROVIDED?  ───────────────────┐
              ◇─────────────────────────────◇               │
                             │ Y                             │
S870                         ▼                               ▼        S880
     ┌──────────────────────────────┐     ┌──────────────────────────────┐
     │      PRINT SCANNING DATA      │     │      TRANSMIT SCANNING        │
     │      ON PRINTING PAPER        │     │   DATA TO EXTERNAL DEVICE     │
     └──────────────────────────────┘     └──────────────────────────────┘
                             │                             │
                             ▼◄────────────────────────────┘
                    ┌──────────────────┐
                    │       END        │
                    └──────────────────┘
```

**European Patent Office**

## EUROPEAN SEARCH REPORT

Application Number

EP 07 11 8676

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 089 163 A (BROTHER IND LTD [JP]) 4 April 2001 (2001-04-04) * abstract; figure 27 * * paragraphs [0151] - [0157] * ----- | 1-20 | INV. H04N1/387 |
| X | US 5 576 848 A (KUSANO HIDEAKI [JP] ET AL) 19 November 1996 (1996-11-19) * abstract * * column 4, line 59 - line 65 * * column 5, line 49 - line 55 * * column 6, line 40 - line 55 * * column 7, line 15 - line 40 * * column 8, line 4 - line 7 * * column 8, line 29 - line 31 * ----- | 1-20 | |
| A | JP 2001 101180 A (BROTHER IND LTD) 13 April 2001 (2001-04-13) * the whole document * ----- | 1-20 | |

TECHNICAL FIELDS SEARCHED (IPC)

H04N

The present search report has been drawn up for all claims

| Place of search | Date of completion of the search | Examiner |
|---|---|---|
| The Hague | 15 April 2008 | Winne, Dominique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 8676

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2008

| Patent document cited in search report | | Publication date | Patent family member(s) | | Publication date |
|---|---|---|---|---|---|
| EP 1089163 | A | 04-04-2001 | AT | 238584 T | 15-05-2003 |
| | | | DE | 60002274 D1 | 28-05-2003 |
| | | | DE | 60002274 T2 | 18-12-2003 |
| | | | US | 7184167 B1 | 27-02-2007 |
| US 5576848 | A | 19-11-1996 | JP | 7111582 A | 25-04-1995 |
| JP 2001101180 | A | 13-04-2001 | NONE | | |

EPO FORM P0459

For more details about this annex : see Official Journal of the European Patent Office, No. 12/82